(19) **Europäisches Patentamt / European Patent Office / Office européen des brevets**

(11) **EP 4 760 350 A1**

(12) **EUROPEAN PATENT APPLICATION**
published in accordance with Art. 153(4) EPC

(43) Date of publication:
**17.06.2026 Bulletin 2026/25**

(21) Application number: **24851328.5**

(22) Date of filing: **23.04.2024**

(51) International Patent Classification (IPC):
$G01S\ 13/60^{(2006.01)}$   $B60L\ 3/00^{(2019.01)}$
$B61L\ 25/04^{(2006.01)}$   $G01P\ 3/36^{(2006.01)}$
$G01S\ 13/34^{(2006.01)}$   $G01S\ 13/931^{(2020.01)}$

(52) Cooperative Patent Classification (CPC):
**B60L 3/00; B61L 25/04; G01P 3/36; G01S 13/34; G01S 13/60; G01S 13/931**

(86) International application number:
**PCT/JP2024/015849**

(87) International publication number:
**WO 2025/032894 (13.02.2025 Gazette 2025/07)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **08.08.2023 JP 2023129113**

(71) Applicant: **Hitachi, Ltd.**
**Tokyo 100-8280 (JP)**

(72) Inventors:
• **HAYASHI, Masaki**
  **Tokyo 100-8280 (JP)**
• **AKAMINE, Yukinori**
  **Tokyo 100-8280 (JP)**
• **HATTORI, Taishi**
  **Tokyo 100-8280 (JP)**

(74) Representative: **MERH-IP Matias Erny Reichl Hoffmann**
**Patentanwälte PartG mbB**
**Paul-Heyse-Straße 29**
**80336 München (DE)**

(54) **SPEED DETECTION DEVICE, SPEED DETECTION SYSTEM, AND SPEED DETECTION METHOD**

(57)     The present invention enables an accurate measurement of running speed even in running regions with a decrease in measurement accuracy of a CW millimeter-wave speed sensor, such as a pit track in a rail yard, a bridge area and the like.

For this purpose, a speed detection apparatus including a speed sensor and a sensor selector. The speed sensor is capable of switching between modes for a CW (Continuous Wave) scheme and a FMCW (Frequency Modulation Continuous Wave) scheme. The speed selector selects the FMCW scheme for the speed sensor at or below a predetermined speed, and selects the CW scheme in other speed regions.

As required, a plurality of speed detection apparatuses is installed in a train formation and also each speed detection apparatus includes an SNR determination unit. When the detection accuracy of one of the speed detection apparatuses decreases, the mode of another speed detection apparatus is changed for a certain period of time in order to acquire accurately the running speed of a car with stability.

FIG. 6

EP 4 760 350 A1

## Description

Technical Field

The present invention relates to a speed detection apparatus, a speed detection system and a speed detection method.

Background Art

Conventionally, a train has received point information from a ground coil installed between a pair of rails, then added the amount of movement obtained from the RPM of a wheel to the point information to perform sequential computation in order to calculate an occupancy position. However, in a tacho-generator used for measurement of the RPM of the wheel, an accurate measurement becomes difficult upon occurrence of slip skid phenomena in which a rail and the wheel are in a non-adhesive state.

Therefore, a sensor has been developed which is placed under the train floor to detect a ground speed in a noncontact manner using radio waves in millimeter waveband.

For example, Patent Literature 1 discloses a speed detection apparatus as described below.

"A speed measuring apparatus 1 has: a transmission function which is installed under the car floor to irradiate a rail 7 (in a broader sense, a track including the rails 7) with an electromagnetic wave (irradiation wave) with the electromagnetic wave, and a reception function to acquire the electromagnetic wave (reflection wave) hitting and then returning from the rail 7. It is noted that the transmission function and the reception function may be implemented by mutually independent antennas or may be implemented by a single antenna having the transmission and reception functions.

The speed measuring apparatus 1 also has a speed calculation function of inputting a reflection wave acquired by the above-described reception function into a computation unit to cause the computation unit to calculate a speed signal of the train based on the frequency of the irradiation wave and the frequency of the reflection wave. More specifically, the speed calculation function of the speed measuring apparatus 1 calculates the speed signal based on a difference between the frequencies using the Doppler effect by which the electromagnetic wave (irradiation wave) irradiated onto the rail 7 and the electromagnetic wave (reflection wave) reflected from the rail 7 differ in frequency from each other while the train runs."

Citation List

Patent Literature

Patent Literature 1: Japanese Unexamined Patent Application Publication No. 2021-18205

Summary of Invention

Technical Problem

In the speed measuring apparatus disclosed in Patent Literature 1, the speed measuring apparatus adopts a millimeter-wave radar called CW (Continuous Wave) scheme which emits radio waves at a constant frequency. However, in a low-speed region, even if the tacho-generator is used, in the CW millimeter-wave radar, the detection accuracy of precise speeds has a tendency to be difficult to achieve as long as the period of time for sampling is set longer. In particular, the CW millimeter-wave radar irradiates not only a rail itself but also a track bed around the rail, so that the speed is detected taking into account the reflection wave from the track bed. This causes a problem on the accuracy of speed detection in a region with a different condition of radar reflection off the track surface, such as a pit track, a bridge area and a water puddle.

To address it, it is an object of the present invention to provide a technology to enable an accurate speed detection, irrespective of the radar reflection conditions of the track surface even in a range from a low-speed region to a high-speed region.

Solution to Problem

To solve the aforementioned problems, one of exemplary speed detection apparatuses according to the present invention is a speed detection apparatus including: a speed sensor and a sensor selector, in which the speed sensor is capable of speed detection using the CW (Continuous Wave) scheme and the FMCW (Frequency Modulation Continuous Wave) scheme, and the speed selector selects the FMCW speed sensor at or below any given speed, and selects the CW speed sensor in other speed regions.

Advantageous Effects of Invention

According to the present invention, it is possible to provide a technology to enable an accurate speed detection, irrespective of the radar reflection conditions of the track surface, in a range from a low-speed region to a high-speed region.

Objects, configurations, and effects other than the above will be apparent from the description of the following embodiments.

Brief Description of Drawings

Fig. 1 is a diagram describing an example of mounting a speed detection apparatus on a train.
Fig. 2 is a diagram describing the positional relationship between a millimeter-wave speed sensor and a track surface.

Fig. 3 is a diagram describing the positional relationship between the millimeter-wave speed sensor and the track surface.

Fig. 4 is a diagram describing the processing of the millimeter-wave speed sensor of a first example.

Fig. 5 is a diagram describing the processing when the millimeter-wave speed sensor described in Fig. 4 is used as CW scheme.

Fig. 6 is a graph describing an example of switching of sensor schemes to be applied in response to a running speed of the train.

Fig. 7 is a diagram describing an example of installing the speed detection apparatus according to a second embodiment.

Fig. 8 is a flowchart showing mode switching logic in the first example.

Fig. 9 is a diagram describing the situation where the train of a four-car formation is approaching a bridge area or a section with a water puddle.

Fig. 10 is a table describing three conditions in a second example.

Fig. 11 is a diagram describing the situation where the train of a five-car formation with three speed detection apparatuses is approaching the bridge area or the section with the water puddle.

Description of Embodiments

Hereinafter, one embodiment of the present invention will be described with reference to the drawings. It is noted that the present invention is not intended to be limited by the embodiment. Also, in the description of the drawings, like reference signs are used to indicate like parts.

If there is a plurality of components having the same or similar functionality, a different suffix may be added to the same reference sign for explanation in some cases. Further, if there is no necessity to distinguish the plurality of components from one another, the suffix may be omitted from the description in some cases.

It will also be understood that, although the terms "first", "second", "third" and the like may be used to explain various elements or components in the present disclosure, the elements or the components should not be limited by these terms. The terms are used only for distinguishing a certain element or component from another element or component. Therefore, a first element or component discussed below can be referred to as a second element or component without departing from the teaching of the concept of the present invention.

For easier understanding of the present invention, a position, size, shape, range and the like of each component illustrated in the drawings may not be expressed as actual position, size, shape, range and the like, in some cases. For this reason, the present invention is not necessarily limited to the positions, sizes, shapes, ranges and the like disclosed in the drawings.

<CW Scheme and FMCW Scheme>

Initially, schemes of a millimeter-wave sensor used in the disclosure is described.

The millimeter-wave sensor has a CW scheme, a FMCW scheme and/or the like, the CW scheme in which millimeter waves with a constant frequency is irradiated to detect a speed from a change in frequency of the irradiation wave and a reflection wave (the Doppler effect), the FMCW scheme which is a scheme to allow a frequency of a radio wave to be emitted to change in a constant frequency band.

In the CW scheme, the speed of a millimeter-wave irradiation target is detected from the Doppler effect of the irradiation wave and the reflection wave, but the distance from the sensor to the irradiation target is incapable of being calculated. Therefore, in the CW scheme, the reflection wave from a rail and the reflection wave from a track bed are incapable of being distinguished, so that when environment changes in track bed and/or track surface, the accuracy of speed detection may be decreased in some cases.

On the other hand, in the FMCW scheme, a millimeter wave changing in frequency at a constant rate is irradiated and the distance from the sensor to the target is able to be calculated from a frequency deviation resulting from a time difference between the irradiation wave and the reflection wave. Therefore, signals for each target group can be separated based on distance information, and this make it possible to analyze a primary reflection wave from a signal determined as the rail. Consequently, the speed of the target is able to be accurately calculated.

However, in the FMCW scheme, the speed measurement is based on a change in distance information, i.e., a change in phase to the above-mentioned frequency deviation. Form this, where $\lambda$ is a wavelength of the millimeter wave to be projected and $T_c$ is a time interval of signals in band B to be repeatedly projected, $V_{max}$ shown in the following expression (1) is an upper limit to measurement speed.

$$V_{max} < \lambda / 4 T_c \cdots (1)$$

Specifically, where $\lambda$ is 4 mm, and $T_c$ is 40 $\mu$s, $V_{max}$ results in approximately 90 km/h.

Further, the FMCW scheme is unsuitable for measurement in a high-speed region because of higher computational burden for calculation than that in the CW scheme.

On the other hand, the speed range of high-speed railway is a wide range from zero km/h to 400 km/h, and a need has existed for a speed detection technique capable of achieving an accurate speed detection even under various track surface conditions within the speed ranges.

<First Embodiment>

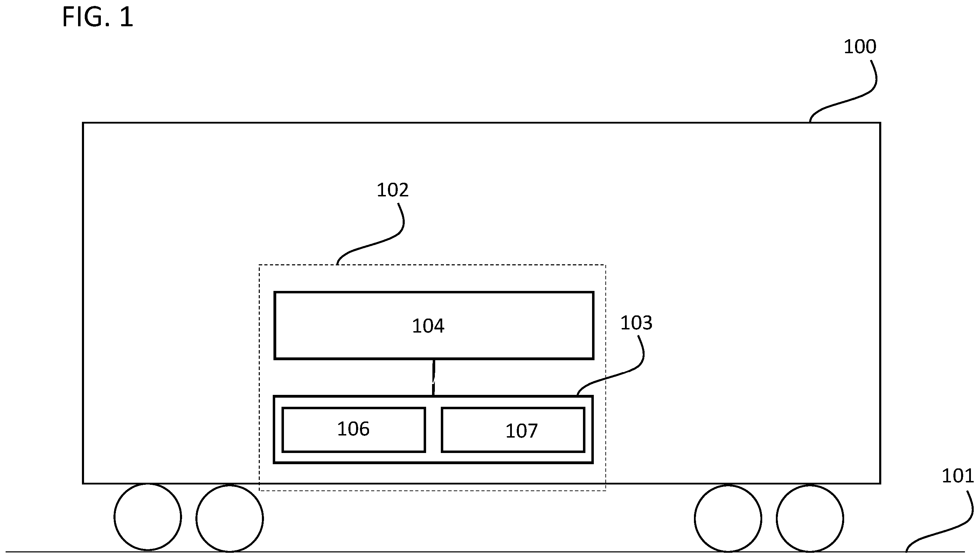

First, an example of mounting the speed detection apparatus on a train is described with reference to Fig. 1.

In Fig. 1, a train 100 is train cars assumed to be operated on a track under various track surface conditions within or without a train yard. Typically, the train is made up of a plurality of cars coupled together, but Fig. 1 illustrates the configuration of only a car (leading car) included in the car for simplification of the description.

Also, Fig. 1 illustrates an example where a train position identification system for measuring a car speed is mounted on the leading car, but in the train position identification system according to the present invention, the speed measuring apparatus may be mounted on another car.

As illustrated in Fig. 1, a train position identification system 102 is mounted on the train 100 running on rails 101, and the train position identification system includes a speed detection apparatus 103 and an on-board control device 104.

In turn, the speed detection apparatus 103 includes a millimeter-wave speed sensor 106 and a sensor selector 107.

It is noted that the on-board control device is able to acquire a position in any given point through a transponder (not shown) installed on the ground, and then calculate a running distance from the any given point using a distance calculated from the speed information acquired from the speed detection apparatus.

(The Case of On Standard Track)

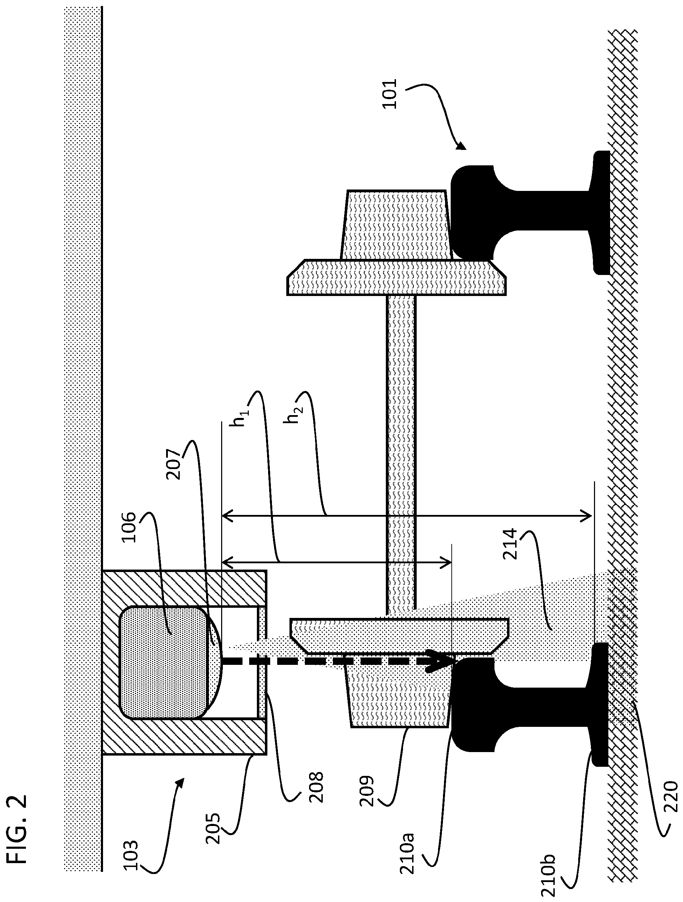

Next, reference is made to Fig. 2 to describe the positional relationship between the millimeter-wave speed sensor and a track bed when the train 100 is located on a standard track. Fig. 2 is a diagram describing the positional relationship among the millimeter-wave speed sensor 106, the rails 101 and the track bed when the rails 101 are laid on approximately the same level as a track bed 220. The millimeter-wave speed sensor 106 includes a lens 207 that is secured in a housing 205 to control the irradiation range of an electromagnetic wave, and a transmission window 208 that is provided to radiate the electromagnetic wave of the millimeter-wave sensor toward the outside of the speed measuring apparatus. The millimeter-wave speed sensor 106 is installed in a lower portion of the car such that the rails 101 fall within an irradiation range 214 of the electromagnetic wave emitted from the millimeter-wave speed sensor 106.

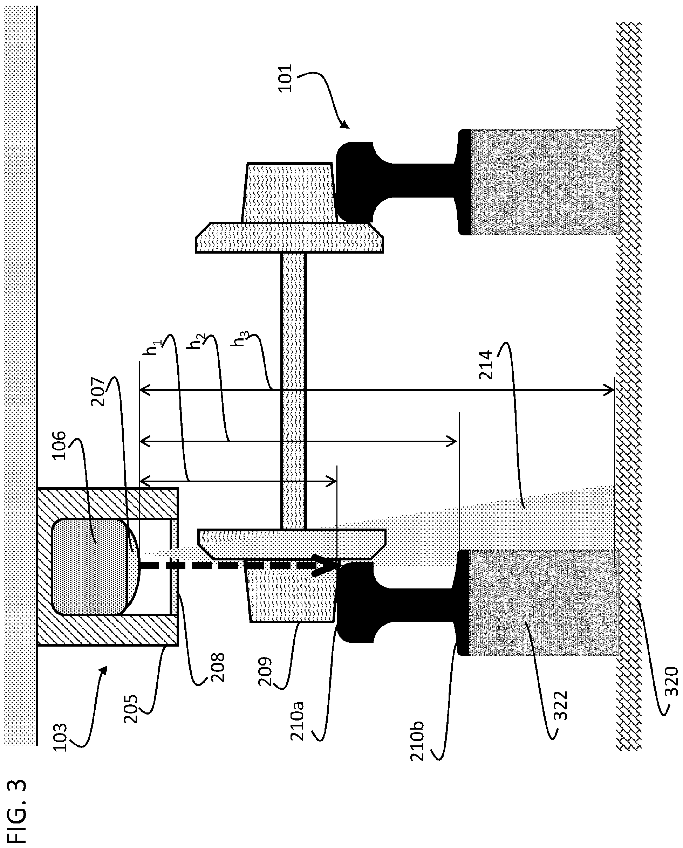

In Fig. 2, Fig. 3, a wheel 209 is shown for better understanding of the relationship between the rails and the irradiation range of the electromagnetic wave radiated from the millimeter-wave speed sensor 106. However, this does not mean that the wheel is located within the irradiation range of the electromagnetic wave. The millimeter-wave speed sensor 106 is not installed directly above the wheel 209, and is installed in a position offset from the position directly above the wheel 209 in the front-rear direction of the traveling direction so that the electromagnetic wave radiated from the millimeter-wave speed sensor is desirably irradiated onto a rail head portion in a slanting direction.

Fig. 2 illustrates a distance of the electromagnetic wave radiated from the millimeter speed sensor, in which $h_1$ is a distance of the electromagnetic wave irradiated onto a rail head portion 210a, and $h_2$ is a distance of the electromagnetic wave irradiated onto a rail bottom portion 210b.

In Fig. 2, when the car and the ground are parallel, the millimeter-wave speed sensor is placed to correspond to the inner end portion of the rail head portion, but the positions of the center of the millimeter-wave speed sensor and the rail head portion are not limited to this case in Fig. 2. The center of the millimeter-wave speed sensor may correspond to the center of the rail head portion or to the outer end portion of the rail head portion. Further, in Fig. 2, the millimeter-wave speed sensor irradiates one of the rails with the electromagnetic wave. However, the number of mounted millimeter-wave sensors and the mounted positions of millimeter-wave sensors are not limited to this case of Fig. 2. For example, the millimeter-wave sensors may be placed above both the left and right rails.

(The Case of Raised Rails)

Subsequently, reference is made to Fig. 3 to describe the positional relationship among the millimeter-wave speed sensor, the rails 101 and a subgrade 320 when the train is placed on raiser members 322 for raising the rails from the subgrade 320 such as in a pit track in a rail yard and the like.

Fig. 3 differs from Fig. 2 in that the rails 101 are not laid on the track bed 220 in Fig. 2, and instead are placed on the raiser members 322 raised from the subgrade 320. Therefore, in the following description, the same or equivalent component mentioned above in Fig. 2 is designated by the same reference sign and a description thereof is simplified or omitted.

In Fig. 3, because the rails are laid on the raiser members 322 raised from the subgrade 320, the distance from the millimeter-wave speed sensor 106 to an irradiation target includes a distance $h_1$ to the rail head portion 210a, a distance $h_2$ to the rail bottom portion 210b and a distance $h_3$ to the subgrade 320. The subgrade 320 is a portion which is the ground on which a serviceman and/or the like walks in the rail yard and/or the like.

In conditions as illustrated in Fig. 3, if the CW millimeter-wave radar is used to detect the speed of the train, in addition to a low-speed movement of the train, the CW millimeter-wave radar receives the reflection waves from various distances, so that a decrease in measurement accuracy of speed may be possibly caused.

Then, in the situation as illustrated in Fig. 3, a decrease in measurement accuracy of speed may possibly result similarly even when the train runs on a bridge as well as running in the rail yard and the like.

(Case of Floods on Subgrade and Track Bed)

Further, in the case of floods on the subgrade and the track bed, even though the distance relationship from the millimeter-wave speed sensor 106 to the irradiation target is similar to that illustrated in Fig. 2, the presence of the water surface may cause many secondary reflections and/or the like, and thus a decrease in measurement accuracy of speed in the CW scheme may possibly result.

<Configuration of Millimeter-wave Sensor>

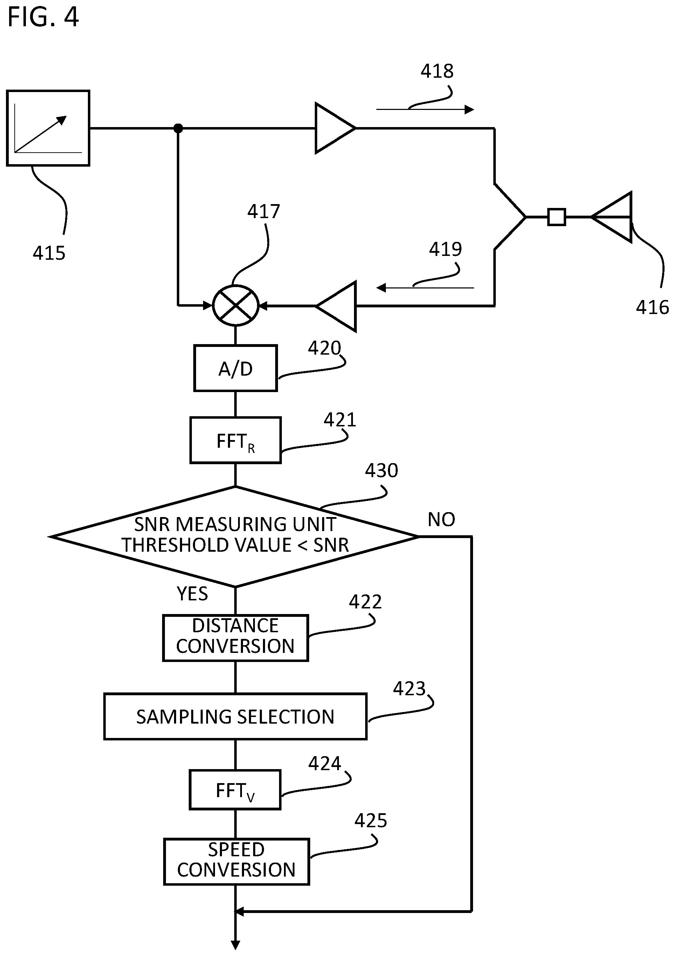

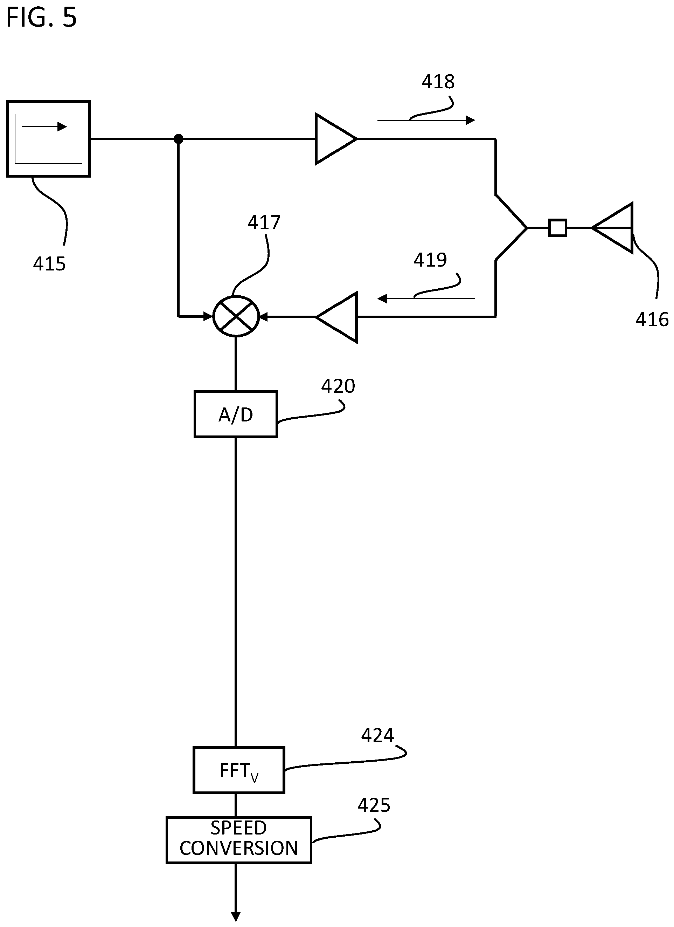

Next, the configuration and the processing of the millimeter-wave speed sensor used in a first embodiment according to the present invention is described with reference to Fig. 4 and Fig. 5.

It is noted that, in the following description, a single speed sensor is described as a sensor capable of switching between the FMCW scheme and the CW scheme. However, the sensor to which the present invention is applied is not necessary to be capable of switching between the schemes. A FMCW sensor and a CW sensor can be separately used by being switched to each other.

Fig. 4 is a diagram describing the processing of the millimeter-wave speed sensor used in the present invention, in particular, the processing in the FMCW scheme. The millimeter-wave speed sensor used in the present invention outputs a variable frequency from a synthesizer 415, and emits an irradiation wave 418 which is the electromagnetic wave radiated from an antenna 416. Also, the antenna receives a reflection wave 419 which is the electromagnetic wave resulting from the reflection of the irradiation wave from an object. In this figure, the irradiation wave and the reflection wave are described as being transmitted and received through a single antenna. However, an antenna for transmission of the irradiation wave and an antenna for reception of the reflection wave may be configured to be installed separately.

The millimeter-wave speed sensor has a mixer 417 for combining two frequencies to generate a signal with a new frequency. A mixer acquires the irradiation wave outputted by a synthesizer, and the reflection wave received through the antenna. Then, the processings of A/D 420 and $FFT_R$ 421 for conversion between an analog signal and a digital signal are executed in order to perform distance conversion 422. After that, a sampling selection 423 is executed to acquire only a signal with a specific distance component from the distance conversion, and then the processing of $FFT_V$ 424 is executed to perform speed conversion 425. It is noted that, in Fig. 4, the FFT processing is executed in the course of the distance conversion and the speed conversion. However, because of different processing details from each other, the FFT processing is divided into the $FFT_R$ and the $FFT_V$, respectively.

Also, after the $FFT_R$ 421, a SNR measuring unit 430 is installed to measure and determine whether or not a component of the reflection wave is recognized as a signal. Then, the processing of the distance conversion 422 may be performed only if the signal exceeds a set threshold value.

Fig. 5 is a diagram describing the processing when the millimeter-wave speed sensor described in Fig. 4 is used as the CW scheme. In the CW scheme, because the frequency of the irradiated millimeter-wave is constant, a millimeter-wave at a constant frequency is generated from the synthesizer 415. Then, the mixer 417 acquires the irradiation wave outputted by the synthesizer and the reflection wave 419 received through the antenna, and then the processings of the A/D 420 and the $FFT_V$ 424 for conversion between an analog signal and a digital signal are executed to perform speed conversion 425. In short, a speed of the target is calculated from a change in frequency by the Doppler effect of the irradiation wave and the reflection wave.

<First Embodiment>

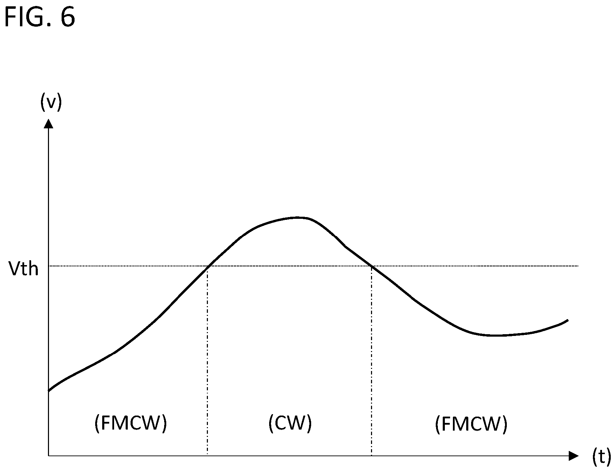

Next, the first embodiment according to the present disclosure is described with reference to Fig. 6. Fig. 6 is a graph describing an example of switching of sensor schemes to be applied in response to a running speed of the train. Fig. 6 shows the running speed of the train on the vertical axis and time on the horizontal axis. And, it shows that if the running speed of the train is at or below a threshold value $V_{th}$, the FNCW scheme is adopted to detect the running speed of the train, and if the running speed of the train exceeds the threshold value $V_{th}$, the CW scheme is adopted to detect the running speed of the train.

Specifically, in the first embodiment, the sensor selector 107 is designed to select the FMCW scheme for the millimeter-wave speed sensor 106 when the speed is at or below a predetermined speed, and to select the CW scheme in other speed regions.

It may be considered to set, for example, the order of 30 km/h as a predetermined speed which is a switching threshold value. In the speed measurement by the CW scheme, because the measurement accuracy decreases in a speed range of at or below the order of 30 km/h, it is reasonable to set a speed around such speeds as a threshold value.

Also, in the pit track in the rail yard and/or the like, when the train runs in a section where the rails are raised from the subgrade 320, the train runs in a speed range of at or below the order of about 30 km/h. From this, defining a threshold value at around such speeds enables an increase in speed accuracy when running on the pit track.

It is noted that the threshold value is not limited to 30 km/h, and may be set to another speed level. For example, a running speed when the train runs on a bridge or a flooded area is set as a threshold value. Then, if an accurate speed measurement is difficult by the CW scheme, the threshold value can be set to switch to the FMCW scheme.

<Modification of First Embodiment>

It is noted that, in the first embodiment, a single threshold value is determined so that CW mode and FMCW mode are switched depending on whether or not the running speed exceeds the threshold value. However, the threshold value at which to make the switching between the CW mode and the FMCW mode is not necessarily be defined as a single threshold value and may be set to exhibit hysteresis.

For example, as examples of hysteresis, it is possible that, when a transition from CW mode to FMCW mode is made, the threshold value is set at 20 km/h, and when a transition from FMCW mode to CW mode is made, the threshold value is set at 30 km/h, and the like.

<Second Embodiment>

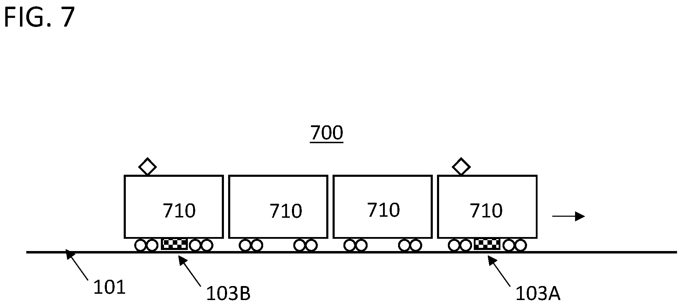

Next, a second embodiment is described with reference to Fig. 7 to Fig. 11. Fig. 7 is a diagram describing an example of installing the speed detection apparatus according to the second embodiment. In the second embodiment, as illustrated in Fig. 7, the plurality of speed detection apparatuses including SNR measuring units is installed in a train formation 700 made up of one or more cars 710 to form a speed detection system.

In the second embodiment, when at least two speed detection apparatuses 103 are installed respectively in the vicinity of a leading portion and the vicinity of a rear end portion in the traveling direction of the formation, based on the speed detected in each of speed detection apparatuses (103A, 103B) and the accuracy of the reflection wave in the SNR measuring unit (the accuracy whether or not the component of the reflection wave can be recognized as a signal), it is possible to set a method of switching between CW mode and FMCW mode in each speed detection apparatus.

(First Example)

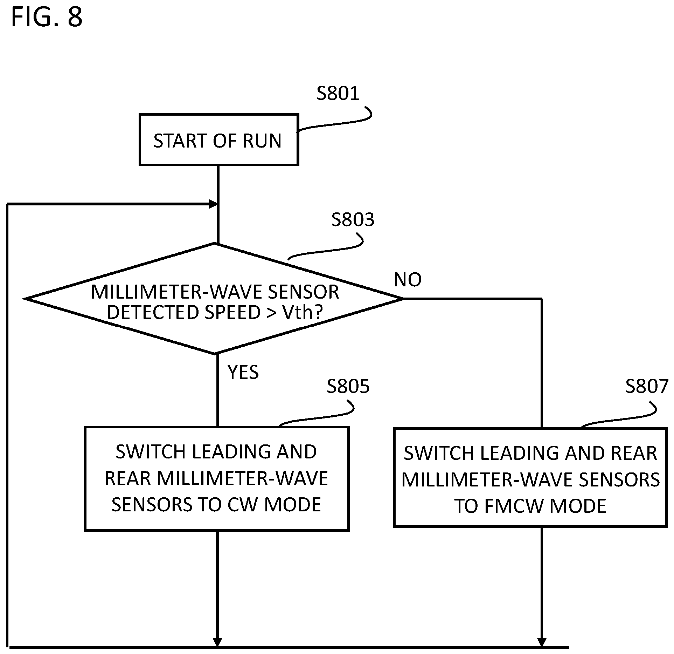

Initially, reference is made to Fig. 8 to describe a speed detection system in a first example of the second embodiment.

Fig. 8 is a flowchart showing mode switching logic in the first example. In the first example, as illustrated in Fig. 7, when the speed detection apparatuses 103A, 103B are installed in the vicinity of the leading portion and the vicinity of the rear end portion in the traveling direction of the train, it is determined whether or not the speed detected by each speed detection apparatus exceeds a speed of any given threshold value, e.g., 30 km/h, to perform switching between the CW scheme and the FMCW scheme.

Where the speed detection apparatuses in the vicinity of the leading portion and the vicinity of the rear end portion in the traveling direction of the train are a first speed detection apparatus and a second speed detection apparatus, respectively, the apparatuses detect the equal speed under normal conditions. Thus, switching logic as described below is applied in the first example.

(Step 801)

An initial value of mode at the start of run may be set as the CW scheme or the FMCW scheme. The flow moves to Step 803 quickly after the train stars running.

(Step 803)

At Step 803, the running speed is calculated based on the mode of the initial value set at the time of the start of run. If the running speed exceeds a speed at an arbitrarily definable threshold value, the flow moves to Step 805. If it does not exceed the speed at the threshold value, the flow moves to Step 807.

(Step 805)

At Step 805, because the speed at the threshold value is exceeded, in any of the first speed detection apparatus and the second speed detection apparatus, the sensor selector is controlled to select the CW scheme. After that, at any given time interval, the flow moves back to Step 803 to calculate a running speed again.

(Step 807)

At Step 807, because the speed at the threshold value is not exceeded, in any of the first speed detection apparatus and the second speed detection apparatus, the sensor selector is controlled to select the CW scheme. After that, at any given time interval, the flow moves back to Step 803 to calculate a running speed again.

This is the control of switching between CW mode and FMCW mode in the first example. An interval between detections of running speed is able to be arbitrarily set. For example, the detection may be performed at intervals of 0.5 seconds or may be performed at other time intervals.

(Second Example)

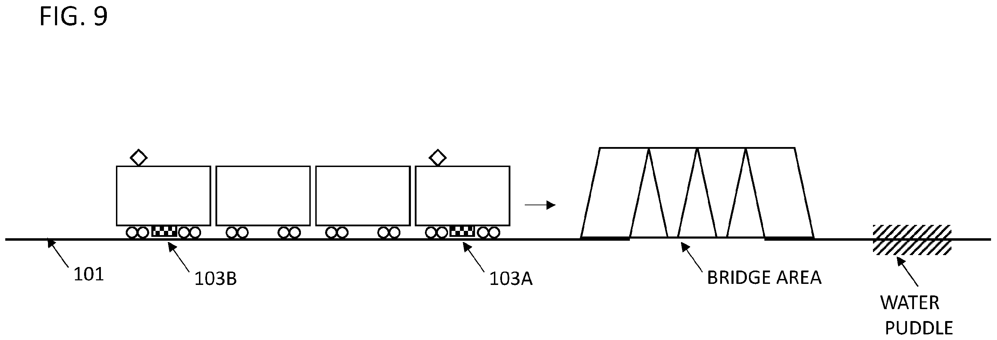

Subsequently, a second example according to the second embodiment is described with reference to Fig. 9 to Fig. 11. In the second example, a method of switching between CW mode and FMCW mode is set when a running train formation is approaching a bridge, a water buddle or the like and the measurement accuracy of the running speed is decreased.

Initially, reference is made to Fig. 9 to describe the situation where the train runs in a section with a bridge or a water puddle on the subgrade.

Fig. 9 is a diagram describing the situation where the train of a four-car formation is approaching the bridge area or the section with the water puddle. When the train formation running from the left toward the right of the drawing is approaching a bridge area, the measurement accuracy of running speed may be decreased first in the speed detection apparatus 103A installed in the leading portion in the traveling direction of the formation. Ater that, then, the measurement accuracy of running speed may be decreased in the speed detection apparatus 103B installed in the rear end portion in the traveling direction of the formation. Further, the measurement accuracy of running speed in the speed detection apparatus 103A installed in the leading portion in the traveling direction is restored, and then the measurement accuracy of running speed in the speed detection apparatus 103B installed in the rear end portion in the traveling direction of the formation is restored.

Then, the situations as described above are not limited to the bridge area, and similarly occurs in a section with the water puddle on the subgrade.

In the situations as described above, in order to grasp an accurate running speed of the running train formation, the speed detection is performed in any one of CW mode and FMCW mode on each of the speed detection apparatuses. Then, a problem is that an accurate running speed of the train formation should be grasped based on a value of which sensor of a plurality of sensors.

In the second example, the conditions where the measurement accuracy of the running speed of each individual speed detection apparatus is decreased are classified into four, and mode of the speed detection apparatus is configured to be set depending on each of the conditions.

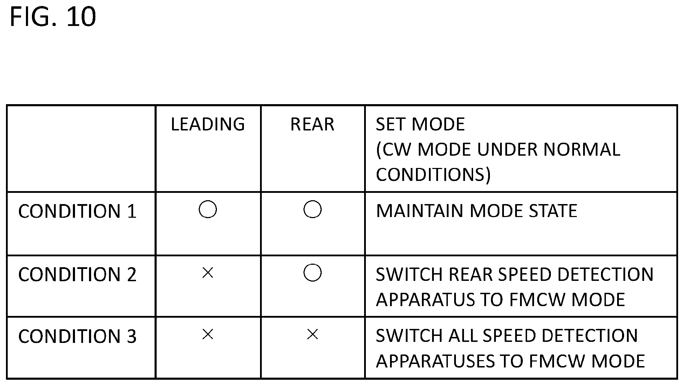

The conditions classified into four are described below with reference to Fig. 10. It is noted that the conditions shown in Fig. 10 are based on the premise that, in the initial stage, the speed detection apparatus is in the CW scheme to measure the running speed. Also, in the table of Fig. 10, a symbol "empty circle" indicates a favorable state of the measurement accuracy of the running speed of the speed detection apparatus, while a symbol "cross" indicates a state of a decrease in measurement accuracy of the running speed of the speed detection apparatus.

(Condition 1)

If there is no problem of the measurement accuracy of the running speed in each of the speed detection apparatus in the leading portion and the speed detection apparatus in the rear end portion, the mode switching is not required in all the speed detection apparatuses, so that the normal CW scheme is maintained. In this case, the running speed of the train may be calculated based on any one of the speed detection apparatuses, and/or the average of the speeds calculated by the plurality of speed detection apparatuses may be taken to be used as a running speed of the train.

(Condition 2)

If a problem arises with the measurement accuracy of the running speed of the speed detection apparatus in the leading portion, the mode of the speed detection apparatus in the rear end portion is switched to the FMCW scheme. This is action to be taken in which, if the train formation is approaching the bridge area or the like and a problem arises with the measurement accuracy of the running speed of the speed detection apparatus in the leading portion, the mode of the speed detection apparatus in the rear end portion is switched quickly to the FMCW scheme in order to allow the speed detection apparatus in the rear end portion to perform accurately a speed detection of the train.

Then, after a predetermined period of time following the restoration of the detection accuracy of the sensor in the speed detection apparatus in the leading portion, the sensor selector of the speed detection apparatus in the rear end portion returns the speed detection apparatus in the rear end portion to the CW scheme.

In this manner, after the leading portion of the formation has passed through the section where the problem arises with the measurement accuracy, all the speed detection apparatuses are able to be returned to the normal mode.

It is noted that, for detection of a decrease in measurement accuracy of the running speed of the speed detection apparatus, the measurement results of the SNR measuring unit 430 that measures and determines whether or not the component of the reflection wave can be recognized as a signal are able to be used, but which is not intended to be limiting. For example, a decrease in measurement accuracy of the running speed may be determined using a steep change in acceleration and/or a plot bandwidth in the CW scheme.

Also, for a predetermined period of time until the mode of the speed detection apparatus in the rear end portion which has been switched to the FMCW scheme is returned to the CW scheme, the predetermined period of time may be set in anticipation of a period of time during which the rear end portion of the formation has passed through the section where a problem arises with the measurement accuracy. For example, where the length of a single car is 30 m, in the case of a 10-car train, the length of the formation results in about 300 m. Therefore, assuming that the train speed is 30 km/h, after the order of 36 seconds following the restoration of the measurement accuracy in the leading portion, it can be considered that the rear end also passes through the section where a problem arises with the measurement accuracy. Thus, the predetermined period of time is able to be set to the order of 36 seconds.

(Condition 3)

When the measurement accuracy of running speed is decreased in both the speed detection apparatuses of the leading portion and the rear end portion, this means the entire formation being under a situation in which the measurement accuracy is incapable of being ensured by the CW scheme. Therefore, it can be considered that the entire formation is running on a bridge area, and/or the like.

In such cases, action to be taken is switching both modes of the speed detection apparatuses in the leading portion and the rear end portion to the FMCW scheme, in order to allow the speed detection apparatuses in the leading portion and the rear end portion to perform accurately the speed detection for the train.

Then, as in the case of Condition 2, after a predetermined period of time following the restoration of the detection accuracy of the sensor in the speed detection apparatus in the leading portion, the sensor selector of the speed detection apparatus in the rear end portion returns the speed detection apparatus in the rear end portion to the CW scheme.

(Third Example)

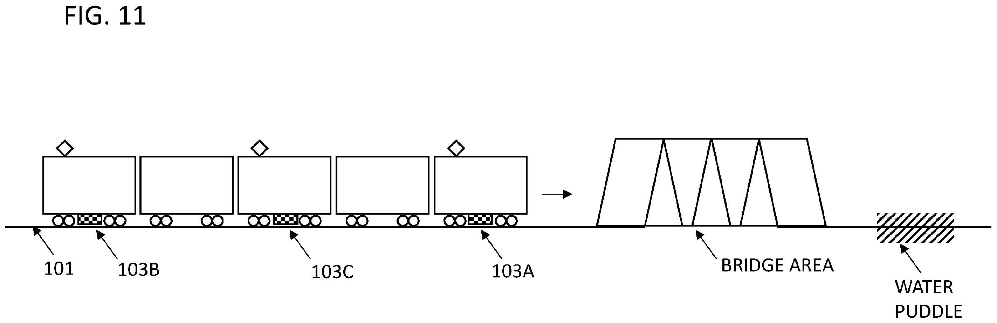

Subsequently, reference is made to Fig. 11 to describe a third example of a speed detection apparatus in a middle portion being installed between the speed detection apparatuses in the leading portion and the rear end portion which have described in the second example. The train running management requires a fail-safe design at all times. From this view, the speed detection apparatus in the middle portion is installed between the speed detection apparatuses in the leading portion and the rear end portion, so that the detection accuracy information of all the speed detection apparatuses in the formation is shared reciprocally among them in order to offer a higher level of safety.

Fig. 11 is an explanatory diagram when three speed detection apparatuses 103A, 103B, 103C are installed separately in three leading, rear end and middle locations of the five-car train.

In the case of including three speed detection apparatuses in this manner, if the measurement accuracy of the leading and/or rear speed detection apparatus(es) decreases, the mode of the middle-located speed detection apparatus 103C is temporarily switched to the FMCW scheme. Then, when the measurement accuracy of the leading and/or rear speed detection apparatus(es) is restored, after the predetermined period of time, the mode of the middle-located speed detection apparatus 103C may be returned to the CW scheme.

In this case, the running speed of the train may be determined based on the calculation result of the middle-located speed detection apparatus 103C, and/or the weighted average of the calculation results of the leading and/or rear speed detection apparatus(es) and/or the like may be obtained and incorporated. In either case, the speed is determined in consideration of the results of the plurality of speed detection apparatuses, thus enabling the speed detection with a higher level of safety.

The embodiments according to the present invention have been described, but the present invention is not limited to the above-described embodiments, and various changes can be made without departing from the scope and sprit of the present invention.

The number of train cars described by way of example can be changed as appropriate, and the installation location(s) and the number of speed detection apparatuses can be changed as appropriate.

List of Reference Signs

100:    train
101:    rail
102:    train position identification system
103:    speed detection apparatus
104:    on-board control device
106:    millimeter-wave speed sensor
107:    sensor selector
205:    housing
207:    lens
208:    transmission window
209:    wheel
214:    irradiation range of electromagnetic wave
220:    track bed
320:    subgrade
322:    raiser member
415:    synthesizer
417:    mixer
418:    irradiation wave
419:    reflection wave
430:    SNR measuring unit
700:    formation
710:    car

**Claims**

1. A speed detection apparatus, comprising: a speed sensor; and a sensor selector, wherein

    the speed sensor is capable of speed detection by a CW (Continuous Wave) scheme and a FMCW (Frequency Modulation Continuous Wave) scheme,
    the speed selector selects the FMCW speed sensor at or below any given speed, and selects the CW speed sensor in other speed regions.

2. The speed detection apparatus according to claim 1, wherein
the speed detection apparatus comprises a SNR determination unit.

3. A speed detection system, comprising a plurality of the speed detection apparatuses according to claim 2 in a train formation, wherein while the sensor selector of each of the speed detection apparatuses selects the CW speed sensor,

if a detection accuracy of the speed sensor in a first speed detection apparatus of the speed detection apparatuses located in a leading portion in a traveling direction decreases, when a detection accuracy of the speed sensor in a second speed detection apparatus of the speed detection apparatuses located in a rear portion in a traveling direction decreases, both the sensor selectors of the first speed detection apparatus and the second speed detection apparatus select the FMCW speed sensors, when the detection accuracy of the speed sensor of the second speed detection apparatus does not decrease, the sensor selector of the first speed detection apparatus continues to select the CW speed sensor, and the sensor selector of the second speed detection apparatus selects the FMCW speed sensor, and then, after a predetermined period of time following restoration of the detection accuracy of the speed sensor in the first speed detection apparatus, the sensor selector of the second speed detection apparatus selects the CW speed sensor for the second speed detection apparatus.

4. The speed detection system according to claim 3, wherein

the speed detection system comprising a third speed detection apparatus in a middle region in the traveling direction between the first speed detection apparatus and the second speed detection apparatus, when the detection accuracy of the speed sensor of the first speed detection apparatus decreases, the sensor selector of the third speed detection apparatus selects the FMCW speed sensor at least for a predetermined period of time, when the detection accuracy of the speed sensor of the first speed detection apparatus is restored, the sensor selector of the third speed detection apparatus selects the CW speed sensor, and a speed of the train is determined based on speeds calculated by the first, second and third speed detection apparatuses.

5. A speed detection method for detecting speed in a train formation including one or more speed detection apparatuses each including a sensor selector and a speed sensor switchable between a CW (Continuous Wave) scheme and a FMCW (Frequency Modulation Continuous Wave) scheme, wherein
at or below a predetermined speed, the speed selector selects the FMCW speed sensor of the speed sensor, and in other speed regions, the speed selector selects the CW speed sensor.

6. The speed detection method according to claim 5, wherein

while the sensor selector of each of the speed detection apparatuses selects the CW speed sensor, if a detection accuracy of the speed sensor in a first speed detection apparatus of the speed detection apparatuses located in a leading portion in a traveling direction decreases, when a detection accuracy of the speed sensor of a second speed detection apparatus of the speed detection apparatuses located in a rear portion in the traveling direction decreases, both the sensor selectors of the first speed detection apparatus and the second speed detection apparatus select the FMCW speed sensors, and when the detection accuracy of the speed sensor of the second speed detection apparatus does not decrease, the sensor selector of the first speed detection apparatus continues to select the CW speed sensor, and the sensor selector of the second speed detection apparatus selects the FMCW speed sensor, and then, after a predetermined period of time following restoration of the detection accuracy of the sensor in the first speed detection apparatus, the sensor selector of the second speed detection apparatus selects the CW speed sensor for the second speed detection apparatus.

EP 4 760 350 A1

FIG. 1

FIG. 2

EP 4 760 350 A1

FIG. 3

EP 4 760 350 A1

# FIG. 4

FIG. 5

FIG. 6

FIG. 7

## FIG. 8

START OF RUN — S801

MILLIMETER-WAVE SENSOR DETECTED SPEED > Vth? — S803

NO

YES

SWITCH LEADING AND REAR MILLIMETER-WAVE SENSORS TO CW MODE — S805

SWITCH LEADING AND REAR MILLIMETER-WAVE SENSORS TO FMCW MODE — S807

FIG. 9

101

103B

103A

BRIDGE AREA

WATER
PUDDLE

FIG. 10

|  | LEADING | REAR | SET MODE<br>(CW MODE UNDER NORMAL<br>CONDITIONS) |
|---|---|---|---|
| CONDITION 1 | ○ | ○ | MAINTAIN MODE STATE |
| CONDITION 2 | × | ○ | SWITCH REAR SPEED DETECTION<br>APPARATUS TO FMCW MODE |
| CONDITION 3 | × | × | SWITCH ALL SPEED DETECTION<br>APPARATUSES TO FMCW MODE |

EP 4 760 350 A1

FIG. 11

101   103B          103C              103A

BRIDGE AREA

WATER
PUDDLE

## INTERNATIONAL SEARCH REPORT

| International application No. |
| --- |
| **PCT/JP2024/015849** |

**A. CLASSIFICATION OF SUBJECT MATTER**

*G01S 13/60*(2006.01)i; *B60L 3/00*(2019.01)i; *B61L 25/04*(2006.01)i; *G01P 3/36*(2006.01)i; *G01S 13/34*(2006.01)i; *G01S 13/931*(2020.01)i
FI: G01S13/60 200; G01S13/34; G01S13/931; G01P3/36 E; B61L25/04; B60L3/00 N

According to International Patent Classification (IPC) or to both national classification and IPC

**B. FIELDS SEARCHED**

Minimum documentation searched (classification system followed by classification symbols)

G01S7/00-G01S7/51; G01S13/00-G01S13/95; G01S17/00-G01S17/95; B60L3/00; B61L25/04; G01P3/36

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | JP 2004-69693 A (HITACHI, LTD.) 04 March 2004 (2004-03-04)<br>paragraphs [0019]-[0108], fig. 1-23 | 1-2, 5 |
| A | US 5087918 A (DELCO ELECTRONICS CORPORATION) 11 February 1992 (1992-02-11)<br>entire text, all drawings | 1-6 |
| A | JP 2017-211356 A (NIPPON SIGNAL CO., LTD. THE) 30 November 2017 (2017-11-30)<br>entire text, all drawings | 1-6 |
| A | JP 2015-506474 A (ROBERT BOSCH GMBH) 02 March 2015 (2015-03-02)<br>entire text, all drawings | 1-6 |
| A | JP 2014-215244 A (JAPAN RADIO CO., LTD.) 17 November 2014 (2014-11-17)<br>entire text, all drawings | 1-6 |
| A | JP 2014-006072 A (NEC CORPORATION) 16 January 2014 (2014-01-16)<br>entire text, all drawings | 1-6 |

☑ Further documents are listed in the continuation of Box C.    ☑ See patent family annex.

| | |
| --- | --- |
| \* Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **17 June 2024** | **02 July 2024** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**

| International application No. |
| :--- |
| **PCT/JP2024/015849** |

## C.    DOCUMENTS CONSIDERED TO BE RELEVANT

| Category* | Citation of document, with indication, where appropriate, of the relevant passages | Relevant to claim No. |
| :---: | :--- | :---: |
| A | WO 2019/145272 A1 (SIEMENS AKTIENGESELLSCHAFT) 01 August 2019 (2019-08-01) entire text, all drawings | 1-6 |
| A | CN 111098890 A (CHINA CREC RAILWAY ELECTRIFICATION BUREAU (GROUP) CO., LTD.) 05 May 2020 (2020-05-05) entire text, all drawings | 1-6 |

Form PCT/ISA/210 (second sheet) (July 2022)

## INTERNATIONAL SEARCH REPORT
### Information on patent family members

International application No.

**PCT/JP2024/015849**

| Patent document cited in search report | | | Publication date (day/month/year) | Patent family member(s) | | | Publication date (day/month/year) |
|---|---|---|---|---|---|---|---|
| JP | 2004-69693 | A | 04 March 2004 | US | 2005/0242986 | A1 | |
| | | | | paragraphs [0019]-[0131], fig. 1-23 | | | |
| | | | | EP | 1385021 | A2 | |
| US | 5087918 | A | 11 February 1992 | (Family: none) | | | |
| JP | 2017-211356 | A | 30 November 2017 | (Family: none) | | | |
| JP | 2015-506474 | A | 02 March 2015 | US | 2015/0005993 | A1 | |
| | | | | WO | 2013/102507 | A1 | |
| | | | | EP | 2800982 | A1 | |
| | | | | DE | 102012200139 | A1 | |
| | | | | CN | 104040369 | A | |
| JP | 2014-215244 | A | 17 November 2014 | (Family: none) | | | |
| JP | 2014-006072 | A | 16 January 2014 | (Family: none) | | | |
| WO | 2019/145272 | A1 | 01 August 2019 | EP | 3721259 | A1 | |
| | | | | DE | 102018200991 | A1 | |
| | | | | CN | 111670381 | A | |
| CN | 111098890 | A | 05 May 2020 | (Family: none) | | | |

Form PCT/ISA/210 (patent family annex) (July 2022)

23

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021018205 A